# EUROPÄISCHE PATENTSCHRIFT

(11) **EP 2 923 193 B1**
(45) Veröffentlichungstag und Bekanntmachung des Hinweises auf die Patenterteilung: **23.08.2017**
(21) Anmeldenummer: 13792928.7
(22) Anmeldetag: 20.11.2013
(51) Int. Cl.: G01N 3/58

(54) **AUTOMATISIERTE PRÜFVORRICHTUNG ZUR BESTIMMUNG DER SCHNEIDLEISTUNG EINES MESSERS**
AUTOMATED TESTING APPARATUS FOR DETERMINING THE CUTTING PERFORMANCE OF A KNIFE
DISPOSITIF DE CONTRÔLE AUTOMATISÉ POUR DÉTERMINER LE POUVOIR DE COUPE D'UN COUTEAU

(30) Priorität: 21.11.2012 DE 102012221283
(43) Veröffentlichungstag der Anmeldung: 30.09.2015
(73) Patentinhaber: WMF Württembergische Metallwarenfabrik AG, 73309 Geislingen/Steige (DE)
(72) Erfinder: MAYER, Roman, 73614 Schorndorf (DE); VON BANK, Reinhold, 88433 Schemmerhofen (DE)
(74) Vertreter: BRP Renaud & Partner mbB Rechtsanwälte Patentanwälte Steuerberater
(86) Internationale Anmeldenummer: PCT/EP2013/074294
(87) Internationale Veröffentlichungsnummer: WO 2014/079889

(56) Entgegenhaltungen:
- DD-A1- 157 022
- DE-A1- 4 027 577
- DE-A1- 4 211 612
- DE-A1-102004 040 427
- DE-U1- 9 305 794
- US-A- 2 472 994
- US-A- 3 447 366
- US-A- 4 528 843
- US-A- 5 450 745
- US-A- 5 571 956
- US-A1- 2010 281 965
- US-A1- 2011 146 372
- US-A1- 2011 269 131
- HANIFI COPUR ET AL: "Field and laboratory studies on natural stones leading to empirical performance prediction of chain saw machines", INTERNATIONAL JOURNAL OF ROCK MECHANICS AND MINING SCIENCES, PERGAMON, UNITED KINGDOM, Bd. 48, Nr. 2, 27. November 2010 (2010-11-27), Seiten 269-282, XP028140705, ISSN: 1365-1609, DOI: 10.1016/J.IJRMMS.2010.11.011 [gefunden am 2010-12-08]

## Beschreibung

Die vorliegende Erfindung betrifft eine automatisierte Prüfvorrichtung und ein Verfahren zur Bestimmung der Schneidleistung eines Messers.

Momentan wird die Schneidleistung von Messern gemäß DIN ISO 8442-5 mittels eines genormten Verfahrens geprüft. Diese Prüfung umfasst die Bewertung der Anfangsschneidfähigkeit (Schärfe zu Beginn [ICP-Wert]) und die der Schneidhaltigkeit (Schärfe nach Gebrauch [CER-Wert = TCC-Wert]). Die Schneidleistung des Messers wird dabei mittels eines Prüfaufbaus getestet, bei dem das zu prüfende Messer mit einer definierten Vorspannkraft [50 N], einer vordefinierten Geschwindigkeit [50mm/s] und einer vordefinierten Schnittlänge [40mm] In einen Papierstapel sägt. Jeder Zyklus umfasst dabei eine Vor- und eine Rückwärtsbewegung über jeweils 40 mm. Die so ermittelte Anfangsschneidfähigkeit ist definiert als die Summe der durchgeschnittenen Papierstreifen der ersten drei Zyklen. Die Schneidhaltigkeit hingegen unterscheidet sich dabei je nach Klingentyp in Klingen, die von einem Verwender nachgeschärft werden können (Typ A) und Klingen, die nicht zum Nachschärfen mittels eines Wetzstahls vorgesehen sind (Typ B). Die Schneidhaltigkeit wird dabei als die Summe der durchgeschnittenen Papierstreifen ermittelt und zwar bei Klingen gemäß dem Typ A nach 60 Zyklen und bei Klingen gemäß dem Typ B nach 200 Zyklen. Um einen schnellen Klingenverschleiß zu simulieren, wird dem Papier zusätzlich Quarz in Höhe von 5 ± 0,5 Gew.-% beigemengt.

Aus der US 2010/0281965 A1 ist eine Prüfvorrichtung zur Bestimmung der Schneidleistung eines Messers bekannt, mit einem Prüfkörper mit einem Grundkörper aus einem Kunststoff mit unterschiedlichen Schichten, in welche das zu prüfende Messer eingedrückt wird.

Aus der DE 10 2004 040 427 A1 ist ein Verfahren zur Bestimmung der Schneidleistung eines Messers bekannt, bei dem das Messer mit seiner Schneide In ein Referenzprodukt, hier ein Kunststoffprofil, mit definierten Eigenschaften eingedrückt wird. Hierbei wird der Zeit-Kraft-Verlauf erfasst und ausgewertet, was als Maß der Schneidfähigkeit des getesteten Messers dienen soll.

Aus der DD 157 022 A1 ist ebenfalls ein Verfahren zur Bestimmung der Schneidleistung bekannt, bei dem der Prüfling mit seiner Schneide in einem Prüfwerkstoff mit definierten Eigenschaften eingedrückt und während des Eindrückens eine Kraft-, Weg- Abhängigkeit als Qualitätsparameter ermittelt wird.

Nachteilig bei dem bekannten und beschriebenen Verfahren ist jedoch, dass das Sägen von Papier generell kein geeignetes Mittel darstellt, um die Schärfe von Klingen an Messern beurteilen zu können. In der Realität umfasst eine Schnittbewegung an Lebensmitteln nämlich einen weit höheren vertikalen Schneidweg im Vergleich zum horizontalen Verfahrweg beim DIN-Papierschneidtest. Dies bedeutet, dass man in der Praxis eher mit einer kleinen zusätzlichen Relativbewegung durch eine Tomate drückt, als dass man diese zersägt. Auch die Kumulierung der Einzelwerte zur Ermittlung der Schneidhaltigkeit stellt kein probates Verfahren dar, da nach Gebrauch einer Klinge interessant ist wie viel sie noch schneiden kann und nicht wie viel sie schon geschnitten hat.

Ein besonderes Problem ergibt sich auch durch die Nutzung von abrasivem Papier, das keine realistische Verschleißsituation darstellt, da unter realen Bedingungen der größte Verschleiß durch Drücken/Schneiden auf der Schneidunterlage (Holz, Kunststoff, etc.) entsteht. Auch eignet sich Papier generell nicht als Medium zur Beurteilung der Schneidleistung, da an der Schneide des Messers eine kleine Kante bzw. ein kleiner Grat vorhanden sein muss, um das Papier überhaupt anreißen zu können. Je besser eine Schneide jedoch poliert bzw. entgratet ist, desto schlechter schneidet diese durch Papier.

Um darüber hinaus vergleichbare Ergebnisse hinsichtlich der ermittelten Schneidleistung erhalten zu können, ist eine exakte Konditionierung des verwendeten Papiers hinsichtlich Temperatur und Feuchtigkeit erforderlich, was in der Praxis oftmals nicht durchgeführt wird oder aber bei Durchführung zu relativ hohen Kosten führt. Das jedoch größte Problem stellt der fehlende Praxisbezug des bisherigen Tests dar.

Der größte Nachteil liegt jedoch darin, dass die Prüfung technisch und zeitlich sehr aufwendig ist, wodurch eine sogenannte "inline"-Prüfung während der Fertigung der Messer komplett ausscheidet. Stellt man bei einer Prüfung eine unzureichende Schneidleistung fest, so muss nachträglich entweder eine ganze Charge an Messern ausgesondert, wenigstens aber nachgeschliffen werden, was einen nicht zu unterschätzenden Logistikaufwand bedeutet.

Die vorliegende Erfindung beschäftigt sich daher mit dem Problem, eine Prüfvorrichtung sowie ein Verfahren zur Bestimmung der Schneidleistung eines Messers anzugeben, welche die Nachteile des Standes der Technik überwinden und insbesondere eine "inline"-Prüfung ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, anstelle bisher zur Bestimmung der Schneidleistung eines Messers verwendeter Prüfvorrichtungen mit jeweils einem Papierstapel nunmehr eine neue und automatisierte Prüfvorrichtung einzusetzen, die nicht nur eine von Umgebungsparametern nahezu unabhängige und gleichbleibend hohe Qualität der Prüfung ermöglicht, sondern zugleich auch eine sogenannte "Inline"-Prüfung, das heißt eine Prüfung der Schneidleistung der Messer während der Produktion, wodurch vergleichsweise rasch auf etwaige Produktionsfehler reagiert werden kann. Die erfindungsgemäße automatisierte Prüfvorrichtung verwendet dabei einen Prüfkörper mit einem Grundkörper aus einem Kunststoff mit einer Härte zwischen 30 und 90 Shore-A und einer haut-/folienähnlichen Schicht aus Polypropylen, in welchen das zu prüfende Messer eingedrückt wird. Durch diesen neuartigen Prüfkörper aus Kunststoff mit definierten Eigenschaften lässt sich die Schneidleistung eines Messers äußerst exakt und darüber hinaus frei von nahezu sämtlichen die Ergebnisse verfälschenden Parameter, wie beispielsweise Feuchte oder Temperatur, ermitteln. Die Schicht simuliert dabei eine Haut, wie diese bei Gemüse und Obst oft vorhanden ist. Im Vergleich zu dem bisher verwendeten Papierstapeln ist eine Konditionierung des neuen Prüfkörpers hinsichtlich beispielsweise seiner Feuchtigkeit nicht erforderlich, so dass diese Fehlerquelle bereits sicher ausgeschlossen werden kann. Von besonders großem Vorteil bei dem neuartigen Prüfkörper ist auch dessen hoher Praxisbezug, welcher mit dem bisher verwendeten Papierstapel nicht möglich war. Die erfindungsgemäße Prüfvorrichtung besitzt darüber hinaus eine erste Erfassungseinrichtung zum Erfassen der Eindrückkraft sowie eine zweite Erfassungseinrichtung zum Erfassen der Eindringtiefe und eine Auswerteeinrichtung zum Auswerten der erfassten Eindrückkraft und der erfassten Eindringtiefe. Darüber hinaus besitzt die Prüfvorrichtung eine Greifeinrichtung zum automatisierten Greifen und Halten/Führen des Messers während der Prüfung, so dass die Greifeinrichtung in der Art beispielsweise eines Roboterarms ausgebildet ist und das zu prüfende Messer selbsttätig aus beispielsweise einem Vorrat entnimmt, der Prüfvorrichtung zuführt und nach der Prüfung der Schneidleistung wieder zurücklegt. Um eine kontinuierliche und unterbrechungsfreie Prüfung mehrerer Messer zu ermöglichen, besitzt die erfindungsgemäße automatisierte Prüfvorrichtung darüber hinaus eine Nachführeinheit zum Nachführen von Prüfkörpern. Hierdurch ist es möglich, dass zwischen zwei Prüfversuchen der Prüfkörper, welcher beispielsweise als Prüfkörperstreifen ausgebildet ist, durch die Nachführeinheit weitergeschoben und dadurch sofort das nächste Messer geprüft werden kann, ohne dass der Prüfkörper - wie bisher erforderlich - aufwändig ausgetauscht werden müsste. Hierdurch lassen sich deutlich mehr Messer in kürzerer Zeit hinsichtlich ihrer Schneidleistung prüfen, wodurch die Qualitätssicherung deutlich gesteigert werden kann. Im besten Falle ist sogar eine 100% Prüfung möglich, bei welcher jedes produzierte Messer hinsichtlich seiner Schneidleistung geprüft wird.

Bei einer vorteilhaften Weiterbildung der erfindungsgemäßen Lösung ist der Prüfkörper als Prüfkörperstreifen ausgebildet und in der Nachführeinheit stapelartig oder gerollt, beispielsweise auf einer Art Coil, aufbewahrt. Durch den Prüfkörperstreifenstapel bzw. entsprechende Prüfkörperstreifenrollen können eine Vielzahl von Prüfversuchen nacheinander durchgeführt werden, ohne dass der Prüfkörper bei jedem Prüfversuch entnommen und wieder neu eingebaut werden müsste. Zwischen zwei Prüfversuchen wird lediglich der Prüfkörperstreifen durch die Nachführeinheit etwas nachgeschoben, so dass das nächste zu prüfende Messer wieder in eine nicht vom letzten Prüfversuch beeinträchtigte Oberfläche des Prüfkörpers eingedrückt werden kann. Je nach Größe des Prüfkörperstapels bzw. der Prüfkörperrollen lässt sich so eine Vielzahl von Prüfversuchen nacheinander durchführen, bevor ein neuer Prüfkörperstapel bzw. eine neue Prüfkörperrolle eingesetzt werden muss. Im günstigsten Fall ist der Vorrat an Prüfkörpern so gewählt, dass dieser beispielsweise lediglich einmal während einer Schicht aufgefüllt werden muss. Mit der erfindungsgemäßen Prüfvorrichtung kann somit eine deutlich höhere Anzahl an Messern hinsichtlich ihrer Schneidleistungen geprüft werden, wobei im optimalen Fall sogar eine 100%-Prüfung möglich ist. Wird dabei eine nicht akzeptable Schneidleistung ermittelt, so kann direkt in den Produktionsprozess eingegriffen und dieser beispielsweise gestoppt oder adaptiert werden.

Bei einer weiteren vorteilhaften Ausführungsform der erfindungsgemäßen Lösung ist die Prüfvorrichtung mit einer Schleifeinrichtung verbunden, wobei die Auswerteeinheit derart ausgebildet ist, dass sie die Schleifeinrichtung entsprechend der von den Erfassungseinrichtungen ermittelten und von der Auswerteeinheit ausgewerteten Werten justiert und so das Schleifergebnis optimiert. In der Schleifeinrichtung werden die Schneiden der einzelnen Messer geschliffen, wobei diese anschließend von der Greifeinrichtung der Prüfvorrichtung zugeführt und dort geprüft werden. Stellt sich bei dem Prüfversuch heraus, dass die Schneidleistung bestimmten Sollvorgaben nicht entspricht, so wird dies von den beiden Erfassungseinrichtungen erfasst, von der Auswerteeinrichtung ausgewertet und direkt an die Schleifeinrichtung übermittelt, worauf diese vorzugsweise automatisch nachgestellt bzw. nachjustiert werden kann, wodurch ein sofortiges Eingreifen in den Produktionsprozess möglich ist. Das Nachjustieren der Schleifeinrichtung kann beispielsweise mittels entsprechender Signale von der Auswerteeinheit der Prüfvorrichtung erfolgen oder aber mittels entsprechender Konkordanztabellen, die entsprechende Schleifparameter entsprechenden Prüfwerten der Auswerteeinrichtung gegenüberstellen. Mittels einer mit der Schleifeinrichtung kommunizierend verbundenen automatisierten Prüfvorrichtung ist somit eine sogenannte "Inline"-Prüfung während der Herstellung der Messer und zugleich auch eine sofortige Reaktion möglich, sofern die von der Prüfvorrichtung ermittelten Schneidleistungen den vorgegebenen Sollwerten nicht entsprechen.

Selbstverständlich ist zur Gewinnung von vergleichbaren und aussagekräftigen Messergebnissen auch die Verwendung eines Prüfkörpers mit stets gleichen und exakt definierten Eigenschaften erforderlich, wobei insbesondere ein Prüfkörper mit einem Grundkörper aus einem thermoplastische Elastomer (TPE) mit einer Härte von ca. 60 Shore A, insbesondere 62 Shore-A, einer Breite von 20 mm und einer Dicke von 6 mm verwendet wird. Da die Härte der Kunststoffe typischerweise in einem Bereich +/-5 Shore variieren kann (bei genauer Prozessführung +/-3 Shore) ist es vorstellbar, dass das Prüfverfahren dies durch ein geeignetes mathematisches Verfahren ausgleichen kann. Insbesondere kann eine Prüfvorrichtung dafür selbst über ein integriertes Härteprüfgerät verfügen.

Zweckmäßig weist die Schicht eine stoffschlüssige Klebeschicht, insbesondere eine Acrylatklebeschicht auf oder ist als solche ausgebildet. Die erfindungsgemäße Schicht kann somit in der Art eines bekannten Tesafilms ausgebildet sein und über die Klebeschicht fest und zugleich einfach mit dem Grundkörper bzw. mit der darauf angeordneten Zwischenschicht verbunden werden. Die für die Schicht verwendete Polypropylenfolie kann dabei eine Dicke von ca. 52 µm aufweisen und so die übliche Hautdicke von Lebensmitteln simulieren.

Bei einer weiteren Ausführungsform der Erfindung ist zwischen dem Grundkörper und der hautartigen Schicht eine Zwischenschicht angeordnet. Diese kann aus verdichtetem Polyethylen (HDPE) ausgebildet sein. Die Zwischenschicht kann als Haftschicht dienen und das Verbinden der hautähnlichen Schicht mit dem Grundkörper erleichtern. Der Grundkörper selbst ist vorzugsweise aus einem thermoplastischen Elastomer (TPE) ausgebildet und stoffschlüssig mit der Zwischenschicht und über die Klebeschicht auch stoffschlüssig mit der haut-/folienähnlichen Schicht verbunden.

Die vorliegende Erfindung beruht weiter auf dem allgemeinen Gedanken, die Schneidleistung eines Messers nicht wie bisher mittels Sägen zu ermitteln, sondern durch Eindrücken des Messers mit seiner Schneide in den zuvor beschriebenen Prüfkörper mit einem Grundkörper aus einem Kunststoff mit einer Härte zwischen 20 und 90 Shore-A und einer haut-/folienähnlichen Schicht aus Propyläen, wobei während des Eindrückens sowohl die Eindrückkraft als auch die Eindringtiefe gemessen werden. Durch die Erfassung dieser beiden Parameter und zugleich durch die Verwendung des Prüfkörpers mit exakt definierten Eigenschaften, lässt sich die Schneidleistung des Messers äußerst exakt und darüber hinaus auch frei von nahezu sämtlichen die Ergebnisse verfälschenden Parameter ermitteln. Auch können mit diesem Verfahren und den erwähnten Prüfkörpern polierte bzw. entgratete Schneiden bewertet werden, deren Schneidleistung beim bisherigen Papierschneidetest eher schlecht ausgefallen wäre, da die zum Anreißen des Papiers erforderlichen Grate bzw. Kanten nicht bzw. nicht ausreichend vorhanden waren. Von besonders großem Vorteil bei dem erfindungsgemäßen Verfahren ist jedoch dessen hoher Praxisbezug, da nunmehr ein Drücken mit einer Relativbewegung und nicht nur ein Sägen erfolgt. Durch den neuen Prüfkörper, der vorzugsweise in Prüfkörper(streifen)stapeln bzw. Prüfkörper(streifen)rollen aufbewahrt und bei Bedarf nachgeführt werden kann, ist zudem ein zeitlich und hinsichtlich des technischen Aufwands deutlich reduziertes Prüfen möglich, so dass das erfindungsgemäße Prüfverfahren sogar in den Produktionsprozess der Messer integriert werden kann und dort eine "Inline"-Prüfung ermöglicht.

Zweckmäßig wird das zu prüfende Messer maximal 3 mm tief in den Prüfkörper eingedrückt. Die maximal vorgegebene Eindringtiefe zur Durchführung des erfindungsgemäßen Verfahrens von 3 mm ermöglicht dabei insbesondere die Gewinnung von vergleichbaren Werten, da bei einer deutlich größeren Eindringtiefe die Kraft zur seitlichen Materialverdrängung einen zu großen Einfluss hat, insbesondere bei Messern mit einem breiten Rücken. Bei einer maximalen Eindringtiefe von deutlich mehr als 3 mm würde somit nicht mehr nur die reine Schneidleistung bzw. Schärfe des Messers gemessen. Selbstverständlich ist zur Gewinnung von vergleichbaren und aussagekräftigen Messergebnissen auch die Verwendung des erfindungsgemäßen Prüfkörpers mit stets gleichen und exakt definierten Eigenschaften erforderlich.

Gemäß einer vorteilhaften Weiterbildung des erfindungsgemäßen Verfahrens, wird das Messer mit seiner Schneide parallel zur Oberfläche des Prüfkörpers angeordnet, wobei das Messer mit seiner Schneide auf die Oberfläche des Prüfkörpers gedrückt wird und wobei die Schneide und die Oberfläche des Prüfkörpers unter einem Winkel α, insbesondere unter einem Winkel von α ca. 30°, zur Horizontalen geneigt sind. Hierdurch kann nicht nur eine orthogonal zur Oberfläche des Prüfkörpers wirkende Kraftkomponente erzeugt werden, sondern durch das Kräfteparallelogramm auch eine parallel zur Oberfläche des Prüfkörpers wirkende Kraft. Hierdurch kann die normale Schneidbewegung besonders praxisnah simuliert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a: eine erfindungsgemäße automatisierte Prüfvorrichtung zur Bestimmung der Schneidleistung eines Messers mit einer optionalen Schleifeinrichtung,
- Fig. 1b: eine Darstellung wie in Fig. 1a, jedoch mit einer anderen Nachführeinheit,
- Fig. 2: einen erfindungsgemäßen Prüfkörper in einer Detailansicht,
- Fig. 3: eine Halteeinrichtung für den Prüfkörper sowie die Stellung des Messers relativ zum Prüfkörper während des Prüfvorgangs ,
- Fig. 4: eine Vielzahl von mit der gemäß der Fig. 1 a und 1 b dargestellten Prüfvorrichtung durchgeführten Prüfversuchen.

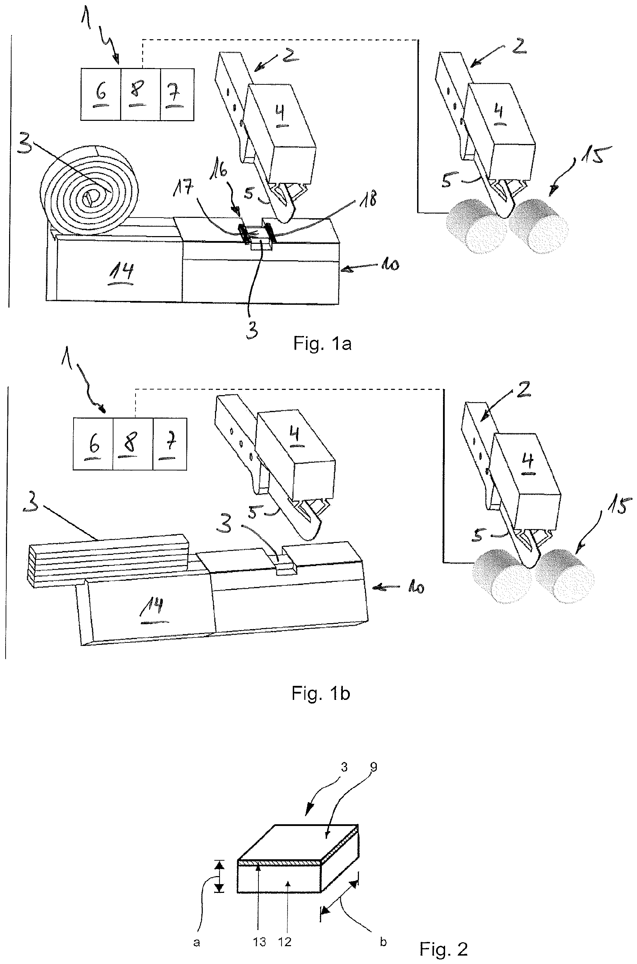

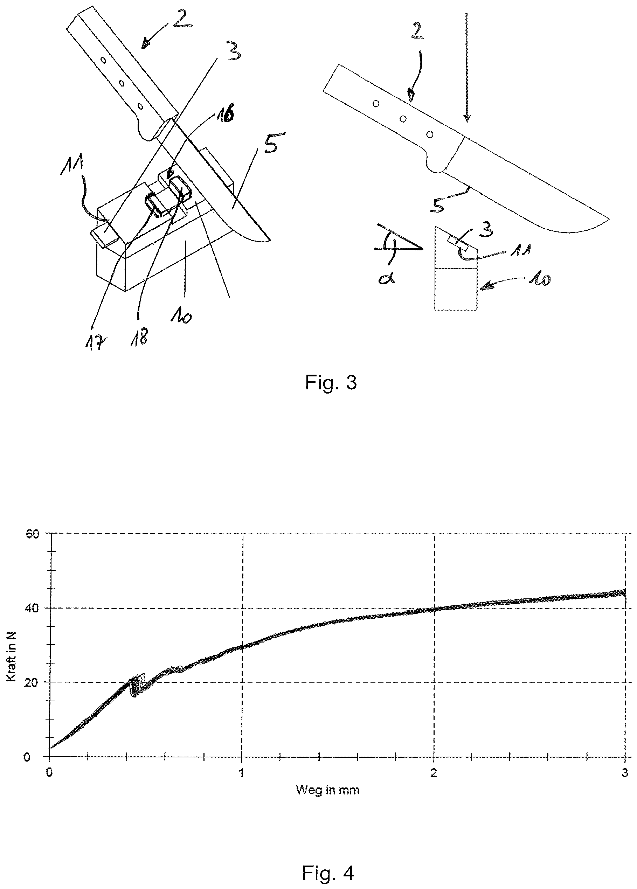

Entsprechend den Fig. 1 a und 1 b, weist eine erfindungsgemäße Prüfvorrichtung 1 zur Bestimmung der Schneidleistung eines Messers 2 einen erfindungsgemäßen Prüfkörper 3 mit definierten Eigenschaften auf (vgl. Fig. 2), in welchen das zu prüfende Messer 2 mittels einer Greifeinrichtung 4 eingedrückt wird. Der Prüfkörper 3 ist dabei von einer Halteeinrichtung 10 gehalten, wie diese beispielsweise zusätzlich in der Fig. 3 dargestellt ist. Selbstverständlich wird dabei nicht das gesamte Messer 2 in dem Prüfkörper 3 eingedrückt, sondern lediglich dessen Schneide 5 bzw. Klinge. Des Weiteren umfasst die erfindungsgemäße Prüfvorrichtung 1 eine erste Erfassungseinrichtung 6 zum Erfassen der Eindrückkraft sowie eine zweite Erfassungseinrichtung 7 zum Erfassen der Eindringtiefe. Ebenfalls vorgesehen ist eine Auswerteeinrichtung 8 zum Auswerten der erfassten Eindrückkraft und der erfassten Eindringtiefe und zum Beurteilen der erfassten Werte. Im gezeigten Beispiel gemäß den Fig. 1 a und b wird das Messer 2 von oben in den Prüfkörper 3 eingedrückt, wobei selbstverständlich auch ein umgedrehter Versuchsaufbau denkbar ist, bei welchem das Messer 2 unten mit nach oben gerichteter Schneide 5 angeordnet ist und der Prüfkörper 3 von oben auf die Schneide 5 des Messers 2 gedrückt wird.

Der erfindungsgemäße Prüfkörper 3 zur Bestimmung der Schneidleistung des Messers 2 besitzt einen Grundkörper 12 aus einem Kunststoff mit einer Härte zwischen 30 und 90 Shore-A, insbesondere aus einem thermoplastischen Elastomer (TPE), und eine hautähnliche Schicht 9 aus Polypropylen (PP). Der Grundkörper 12 besitzt vorzugsweise eine Härte von 60 Shore-A, eine Breite b von ca. 20 mm und eine Dicke a von ca. 6,0 mm, wogegen die Schicht 9 eine Dicke von ca. 0,052 mm aufweist. Die Schicht 9 ist beispielsweise als Polyproylenfolie ausgebildet und weist eine stoffschlüssige Klebeschicht, insbesondere eine Acrylatklebeschicht, auf, über welche sie mit dem Grundkörper 12 verklebt ist. Eine derartige Schicht 9 bzw. Haut stellt einen hohen Praxisbezug, insbesondere zu Lebensmitteln mit Haut.

Darüber hinaus kann zwischen dem Grundkörper 12 und der Schicht 9 eine Zwischenschicht 13 angeordnet sein, die insbesondere aus verdichtetem Polyethylen (HDPE) ausgebildet ist. Die Zwischenschicht weist 13 eine Dicke von ca. 0,1 mm aufweist und bildet zugleich eine verbesserte Haftung für die aufzuklebende Schicht 9. In diesem Fall wäre der Grundkörper 12 nur 5,9 mm dick.

Zur Durchführung des erfindungsgemäßen Verfahrens, wie dies später noch erläutert wird, ist sicherzustellen, dass die Schicht 9 rutschfest auf dem Prüfkörper 3 bzw. auf der Zwischenschicht 13 angeordnet ist. Durch die stoffschlüssig mit dem Prüfkörper 3 verbundene Schicht 9 kann eine Relativbewegung zwischen der Schicht 9 und dem Prüfkörper 3 zuverlässig ausgeschlossen werden.

Wie den Fig. 1 a und 1 b weiter zu entnehmen ist, weist die erfindungsgemäße automatisierte Prüfvorrichtung 1 zusätzlich noch die Greifeinrichtung 4 zum Greifen und Halten/Führen des Messers 2 während der Prüfung auf. Die Greifeinrichtung 4 packt dabei das Messer 2 am Griff oder beispielsweise an der Schneide 5 und führt mit diesem den Prüfvorgang durch. Um den Prüfkörper 3 sicher während des Prüfvorgangs fixieren zu können, ist dieser in einer Halteeinrichtung 10 gehalten und wird über eine seitliche Einschuböffnung 11 in diese eingeschoben und in dieser fixiert. Seitlich angebaut an die erfindungsgemäße automatisierte Prüfvorrichtung 1 ist eine Nachführeinheit 14 zum Nachführen der Prüfkörper 3, wodurch eine unterbrechungsfreie Prüfung zumindest zweier, möglichst aber vieler Messer 2 möglich ist. Der Prüfkörper 3 selbst ist dabei als Prüfkörperstreifen ausgebildet und in der Nachführeinheit 14 gerollt (vgl. Fig. 1 a) oder stapelartig (vgl. 1 b) aufbewahrt. Hierdurch ist es insbesondere möglich, den Prüfkörper 3 als Endlosband auszubilden.

Betrachtet man nochmals die Fig. 1 a und 1 b, so kann man erkennen, dass die Prüfvorrichtung 1 mit einer Schleifeinrichtung 15 verbunden ist, wobei die Auswerteeinheit 8 derart ausgebildet ist, dass sie die Schleifeinrichtung 15 entsprechend der von den Erfassungseinrichtungen 6, 7 ermittelten und von der Auswerteeinheit 8 ausgewerteten Werte justiert und so das Schleifergebnis optimiert. Wird also während der Prüfung der Schneidleistung des Messers 2 in der Prüfvorrichtung 1 eine unzureichende Schneidleistung ermittelt bzw. eine unter einem vorgegebenen Sollwert liegende Schneidleistung, so wird dies von der Auswerteeinheit 8 an die Schleifeinrichtung 15 übermittelt, so dass diese entsprechend nachjustiert und das Schleifergebnis verbessert wird. Das Nachjustieren der Schleifeinrichtung 15 kann automatisch erfolgen. Dabei ist denkbar, dass das geprüfte und den Sollwert nicht erreichende Messer 2 nochmals geschliffen wird oder aber dieses ausgesondert und sämtliche nachfolgende Messer mit einer neu justierten Schleifeinrichtung 15 geschliffen werden.

Des Weiteren ist auch denkbar, dass die Greifeinrichtung 4 Teil der Schleifeinrichtung 15 ist, so dass die Prüfvorrichtung 1 generell auch eine Greifeinrichtung 4 einer benachbarten Schleifeinrichtung 15 mit nutzen kann. In diesem Fall müsste die erfindungsgemäße Prüfvorrichtung 1 keine eigene, das heißt separate Greifeinrichtung 4 besitzen, sondern könnte auf die ohnehin bei einer Schleifeinrichtung 15 schon vorhandene Greifeinrichtung zurückgreifen. Die gemäß den Fig. 1 a und 1 b gezeigt Greifeinrichtung 4 könnte somit Teil der Prüfvorrichtung 1 oder Teil der Schleifeinrichtung 15 sein.

Die Schleifeinrichtung 15 ist in den Fig. 1 a,b nur stark schematisiert dargestellt, so dass diese selbstverständlich auch eine Schleifscheibe und eine Polier/Entgratscheibe aufweisen kann. Darüber hinaus ist denkbar, dass je Schleif- oder Polier-/Entgratvorgang nur eine Messerseite oder gleichzeitig beide Messerseiten bearbeitet werden.

Betrachtet man die Fig. 3, so kann man erkennen, dass die Schneide 5 des zu prüfenden Messers 2 auf die Oberfläche des Prüfkörpers 3 unter Winkel α, insbesondere unter einem Winkel α von ca. 30° zur Horizontalen geneigt sind. Durch die Neigung sowohl der Schneide 5 als auch des Prüfkörpers 3 kann eine schräg zur Orthogonalen der Oberfläche des Prüfkörpers 3 ausgerichtete Schneidbewegung des Messers 2 während des Prüfvorgangs erzielt werden, ohne dass hierfür das Messer 2 - wie bei bisherigen Sägeversuchen erforderlich - hin und her bewegt werden müsste. Selbstverständlich könnte der Prüfkörper 3 auch im Wesentlichen horizontal angeordnet werden, so dass in diesem Fall auch das Messer 2 horizontal angeordnet wäre und die Schneide 5 orthogonal auf die Oberfläche des Prüfkörpers 3 drücken würde. Eine Schneidbewegung parallel zur Oberfläche des Prüfkörpers 3 könnte dann beispielsweise mittels der als Roboterarm ausgebildeten Greifeinrichtung 4 erfolgen.

Selbstverständlich ist es auch denkbar, dass der Prüfkörper 3 mit seiner Oberfläche horizontal angeordnet ist und die Schneidebewegung des Messers 2 schräg zur Oberfläche ausschließlich durch eine entsprechende Bewegung der Greifeinrichtung 4 realisiert wird.

Im Diagramm der Fig. 4 ist auf der Ordinate die Eindrückkraft in Newton und auf der Abszisse die Eindringtiefe in Millimeter aufgetragen. Betrachtet man nun die Fig. 4, so kann man an dieser erkennen, dass bei einer Vielzahl von Prüfzyklen mit der erfindungsgemäßen Prüfvorrichtung 1 und unterschiedlichen baugleichen Messern 2 nahezu identische Werte auftreten, woraus eine vergleichsweise hohe Wiederholgenauigkeit resultiert. Im Vergleich zu bisherigen Papierstapeln zur Ermittlung der Schneidleistung bzw. der Anfangsschneidfähigkeit und der Schneidhaltigkeit ist der erfindungsgemäß verwendete Prüfkörper 3 relativ unempfindlich gegenüber äußeren Einflüssen, wie beispielsweise Temperatur oder Feuchte. Hierdurch kann insbesondere eine bisher erforderliche aufwändige Konditionierung, beispielsweise die Lagerung in einem Klimaschrank, vermieden werden. Durch die Verwendung des Prüfkörpers 3 mit vordefinierten Eigenschaften lassen sich somit reproduzierbare und zugleich auch aussagekräftige Ergebnisse hinsichtlich der Schneidleistung des Messers 2 erzielen.

Das erfindungsgemäße Verfahren zur Bestimmung der Schneidleistung des Messers 2 wird dabei wie folgt durchgeführt: Zunächst wird das zu prüfende Messer 2 von der Greifeinrichtung 4 aus dem Produktionsprozess entnommen und mit seiner Schneide 5 in den Prüfkörper 3 eingedrückt. Der Prüfkörper 3 besitzt dabei den zuvor erwähnten Grundkörper 12 aus einem Kunststoff mit einer Härte zwischen 30 und 90 Shore-A sowie eine haut-/folienähnliche Schicht 9 aus Polypropylen. Zwischen dem Grundkörper 12 und der Schicht 9 kann darüber hinaus eine Zwischenschicht 13 angeordnet sein, die beispielsweise aus verdichtetem Polyethylen (HDPE) ausgebildet ist und eine Dicke von ca. 0,1 mm aufweist.
Während des Eindrückens wird dabei sowohl die Eindrückkraft als auch die Eindringtiefe gemessen mittels der zuvor beschriebenen Auswerteeinheit 8 ausgewertet. Bei dem erfindungsgemäßen Verfahren wird das zu prüfende Messer 2 maximal ca. 3 mm tief in den Prüfkörper 3 eingedrückt, um tatsächlich auch lediglich die Schneidleistung zu messen und nicht etwa zusätzlich die Kraft, die erforderlich ist, um das Material des Prüfkörpers 3 zur Seite hin zu verdrängen. Eine derartige Verdrängungskraft ist insbesondere bei zu großer Eindringtiefe und bei Messung von Messern mit breitem Rücken zu erwarten, wobei in diesem Fall die Ergebnisse verfälscht werden würden.

Die nun mit der Prüfvorrichtung 1 ermittelte Schneidleistung wird mit vorgegebenen Sollwerten verglichen, wobei bei einem nicht Erreichen dieser Sollwerte das geprüfte Messer 2 zurück zur Schleifeinrichtung 15 verbracht und dort nachgeschliffen oder aber ausgesondert wird. Steht die erfindungsgemäße Prüfvorrichtung 1 in kommunizierender Verbindung zu der Schleifeinrichtung 15 ist auch denkbar, dass die Auswerteeinheit 8 der Prüfvorrichtung 1 entsprechende Justiersignale an die Schleifeinrichtung 15 übermittelt, die im Zusammenhang mit den erfassten und ausgewerteten Prüfergebnissen stehen und die die Schleifeinrichtung 15 so nachjustieren, dass die anschließend dort geschliffenen Messer die Sollvorgaben hinsichtlich ihrer Schneidleistung nunmehr erfüllen. Durch die Kopplung der erfindungsgemäßen Prüfvorrichtung 1 mit der Schleifeinrichtung 15 ist insbesondere auch eine sogenannte "Inline"-Prüfung von Messern 2 während des Produktionsprozesses möglich, so dass im günstigen Falle sogar eine 100%-Prüfung der produzierten Messer 2 möglich ist, wodurch eine deutliche Qualitätssteigerung erreicht werden kann. Alternativ ist auch vorstellbar, dass lediglich stichprobenartig, beispielsweise jedes zehnte Messer 2, geprüft wird. Im Vergleich zu bisherigen Papierstapelschneidetests ist die erfindungsgemäße Prüfvorrichtung 1 aufgrund der Greifeinrichtung 4 und der Nachführeinheit 14 zum Nachführen der Prüfkörper 3 in der Lage den eigentlichen Prüfvorgang, das heißt den Schneidtest, vergleichsweise schnell und einfach durchzuführen. Durch den Entfall einer aufwändigen Konditionierung für den Prüfkörper 3 ist die Prüfung der Schneidleistung mit der erfindungsgemäßen Prüfvorrichtung 1 und dem erfindungsgemäßen Prüfkörper 3 deutlich weniger aufwändig und dadurch kostengünstiger und gewährleistet zudem eine hohe Wiederholgenauigkeit.

Um die parallele Stellung der Schneide 5 relativ zur Oberfläche des Prüfkörpers 3 sicherzustellen, kann darüber hinaus eine Lichtspaltprüfeinrichtung 16 vorgesehen werden, die auf der einen Seite eine kleine Lichtquelle 17 und auf der anderen Seite einen lichtempfindlichen Sensor 18 aufweist (vgl. Fig. 1 a), der bei einem nicht parallelen Aufsetzen der Schneide 5 auf die Oberfläche des Prüfkörpers 3 einen Lichteinfall detektiert und die Greifeinrichtung 4 derart nachsteuert, dass die Klinge 5 parallel auf die Oberfläche des Prüfkörpers 3 aufgesetzt wird.

## Patentansprüche

1. Zur Bestimmung der Schneidleistung eines Messers (2) vorgesehene automatisierte Prüfvorrichtung (1) mit
- einem Prüfkörper (3) mit einem Grundkörper (12) aus einem Kunststoff mit einer Härte zwischen 30 und 90 Shore-A und einer haut-/folienähnlichen Schicht (9) aus Polypropylen (PP), in welchen das zu prüfende Messer (2) eingedrückt wird,
- einer ersten zum Erfassen der Eindrückkraft ausgebildeten Erfassungseinrichtung (6),
- einer zweiten zum Erfassen der Eindringtiefe ausgebildeten Erfassungseinrichtung (7),
- einer zum Auswerten der erfassten Eindrückkraft und der erfassten Eindringtiefe ausgebildeten Auswerteeinrichtung (8),
- einer zum Greifen und Halten/Führen des Messers (2) während der Prüfung ausgebildeten Greifeinrichtung (4),
- einer zum Nachführen von Prüfkörpern (3) ausgebildeten Nachführeinheit (14), so dass eine unterbrechungsfreie Prüfung zumindest zweier Messer (2) möglich ist.

2. Prüfvorrichtung nach Anspruch 1,
**dadurch gekennzeichnet,**
**dass** der Prüfkörper (3) als Prüfkörperstreifen ausgebildet ist und in der Nachführeinheit (14) stapelartig oder gerollt aufbewahrt ist.

3. Prüfvorrichtung nach einem der vorhergehenden Ansprüche,
**dadurch gekennzeichnet,**
**dass** eine Schneide (5) des zu prüfenden Messers (2) und die Oberfläche des Prüfkörpers (3) unter einem Winkel α, insbesondere unter einem Winkel α von ca. 30°, zur Horizontalen geneigt sind.

4. Prüfvorrichtung nach einem der vorhergehenden Ansprüche,
**dadurch gekennzeichnet,**
- **dass** der Kunststoff des Grundkörpers (12) ein thermoplastisches Elastomer (TPE), aufweist, und/oder
- **dass** zwischen dem Grundkörper (12) und der Schicht (9) eine Zwischenschicht (13) angeordnet ist, wobei die Zwischenschicht (13) Bestandteil des Grundkörpers (12) sein kann.

5. Prüfvorrichtung nach Anspruch 4,
**dadurch gekennzeichnet,**
- **dass** die Zwischenschicht (13) aus verdichtetem Polyethylen (HDPE) ausgebildet ist, und/oder
- **dass** die Zwischenschicht (13) eine Dicke von ca. 0,1 mm aufweist.

6. Prüfvorrichtung nach einem der vorhergehenden Ansprüche,
**dadurch gekennzeichnet,**
**dass** die haut-/folienähhnliche Schicht (9) eine Dicke von ca. 0,052 mm aufweist.

7. Prüfvorrichtung nach einem der Ansprüche 4 bis 6,
**dadurch gekennzeichnet,**
**dass** die Schicht (9) eine stoffschlüssige mit der Zwischenschicht (13) verbindbare Klebeschicht, insbesondere eine Acrylatklebeschicht, aufweist.

8. Prüfvorrichtung nach einem der vorhergehenden Ansprüche,
**dadurch gekennzeichnet,**
- **dass** die Prüfvorrichtung (1) mit einer Schleifeinrichtung (15) verbunden ist,
- **dass** die Auswerteinheit (8) derart ausgebildet ist, dass sie die Schleifeinrichtung (15) entsprechend der von den Erfassungseinrichtungen (6,7) ermittelten und von der Auswerteeinheit (8) ausgewerteten Werten justiert und so das Schleifergebnis optimiert.

9. Schleifeinrichtung (15) mit einer Prüfvorrichtung (1) nach einem der Ansprüche 1 bis 7, wobei die Greifeinrichtung (4) derart ausgebildet ist, dass sie das Messer (2) sowohl beim Prüfen in der Pürfvorrichtung (1) als auch beim zeitlich versetzten Schleifen in der Schleifeinrichtung (15) greift und hält.

10. Zur Bestimmung der Schneidleistung eines Messers (2) vorgesehenes Verfahren, wobei das Messer (2) mit seiner Schneide (5) in einen Prüfkörper (3) eingedrückt wird und während des Eindrückens sowohl die Eindrückkraft als auch die Eindringtiefe gemessen und mittels einer Auswerteeinheit (8) ausgewertet werden,
**dadurch gekennzeichnet,**
**dass** der Prüfkörper (3) aus einem Grundkörper (12) mit einer Härte zwischen 30 und 90 Shore-A und aus einer haut-/folienähnlichen Schicht aus Polypropylen (PP) besteht.

11. Verfahren nach Anspruch 10,
**dadurch gekennzeichnet,**
- **dass** das Messer (2) mit seiner Schneide (5) parallel zur Oberfläche des Prüfkörpers (3) angeordnet wird,
- **dass** das Messer (2) mit seiner Schneide (5) auf die Oberfläche des Prüfkörpers (3) gedrückt wird, wobei die Schneide (5) und die Oberfläche des Prüfkörpers (3) unter einem Winkel α, insbesondere unter einem Winkel α von ca. 30°, zur Horizontalen geneigt sind.

12. Verfahren nach Anspruch 10 oder 11,
**dadurch gekennzeichnet,**
**dass** das zu prüfende Messer (2) maximal drei Millimeter tief in den Prüfkörper (3) eingedrückt wird.

13. Verfahren nach einem der Ansprüche 10 bis 12,
**dadurch gekennzeichnet,**
**dass** die Prüfvorrichtung (1) die von den Erfassungseinrichtungen (6,7) ermittelten Werten mittels der Auswerteinheit (8) auswertet und an eine mit der Prüfvorrichtung (1) kommunizierend verbundene Schleifeinrichtung (15) übermittelt und diese entsprechend den von den Erfassungseinrichtungen (6,7) ermittelten und von der Auswerteeinheit (8) ausgewerteten Werten nachstellt und so das Schleifergebnis optimiert.

## Claims

1. Automated testing device (1) to determine the cutting capacity of a knife (2) comprising
- a test body (3) with a base body (12) of a plastic with a hardness of between 30 and 90 shore A and a skin/film-like layer (9) of polypropylene (PP) into which the knife (2) to be tested is pressed,
- a first recording device (6) configured for recording the pressing force,
- a second recording device (7) configured for recording the penetration depth,
- an evaluation device (8) configured for evaluating the recorded pressing force and the recorded penetration depth,
- a gripping device (4) configured for gripping and holding/guiding the knife (2) during the test,
- a tracking unit (14) configured for tracking test bodies (3) such that an uninterrupted test of at least two knives (2) is possible.

2. Testing device according to claim 1,
**characterised in that**
the test body (3) is configured as test body strips and is stored in the tracking unit (14) in a stacked manner or rolled.

3. Testing device according to any one of the preceding claims,
**characterised in that**
a blade (5) of the knife (2) to be tested and the surface of the test body (3) are inclined to the horizontal at an angle α, in particular at an angle α of approx. 30°.

4. Testing device according to any one of the preceding claims, **characterised in that**
- the plastic of the base body (12) has a thermoplastic elastomer (TPE) and/or
- an intermediate layer (13) is arranged between the base body (12) and the layer (9) wherein the intermediate layer (13) may be a part of the base body (12).

5. Testing device according to claim 4,
**characterised in that**
- the intermediate layer (13) is configured from high-density polyethylene (HDPE) and/or
- the intermediate layer (13) has a thickness of approx. 0.1 mm.

6. Testing device according to any one of the preceding claims,
**characterised in that**
the skin/film-like layer (9) has a thickness of approx. 0.052 mm.

7. Testing device according to any one of claims 4 to 6,
**characterised in that**
the layer (9) has a materially-bonded adhesive layer, in particular an acrylate adhesive layer connectable to the intermediate layer (13).

8. Testing device according to any one of the preceding claims, **characterised in that**
- the testing device (1) is connected to a grinding device (15),
- the evaluation unit (8) is configured such that it adjusts the grinding device (15) corresponding to the values determined by the recording devices (6, 7) and evaluated by the evaluation unit (8) and thus optimises the grinding result.

9. Grinding device (15) comprising a testing device (1) according to any one of claims 1 to 7, wherein the gripping device (4) is configured such that it grips and holds the knife (2) both during the test in the testing device (1) and during phased grinding in the grinding device (15).

10. Method intended to determine the cutting capacity of a knife (2), wherein the knife (2) is pressed with its blade (5) into a test body (3) and during said pressing, both the pressing force and the penetration depth are measured and evaluated by means of an evaluation unit (8), **characterised in that** the test body (3) consists of a base body (12) with a hardness of between 30 and 90 shore A and a skin/film-like layer of polypropylene (PP).

11. Method according to claim 10,
**characterised in that**
- the knife (2) is arranged with its blade (5) parallel to the surface of the test body (3),
- the knife (2) is pressed with its blade (5) on the surface of the test body (3) wherein the blade (5) and the surface of the test body (3) are inclined to the horizontal at an angle α, in particular at an angle α of approx. 30°.

12. Method according to claim 10 or 11,
**characterised in that**
the knife (2) to be tested is pressed into the test body (3) to a maximum depth of 3 millimetres.

13. Method according to any one of claims 10 to 12,
**characterised in that**
the testing device (1) evaluates the values determined by the recording devices (6, 7) by means of the evaluation unit (8) and transmits them to a grinding device (15) connected in a communicating manner to the testing device (1) and adjusts them corresponding to the values determined by the recording devices (6, 7) and evaluated by the evaluation unit (8) and thus optimises the grinding result.

## Revendications

1. Dispositif de contrôle (1) automatisé prévu pour déterminer la capacité de coupe d'un couteau (2), avec
- un corps de contrôle (3), avec un corps de base (12) en une matière plastique ayant une dureté comprise entre 30 et 90 Shore-A et avec une couche (9) semblable à une peau ou à une feuille en polypropylène (PP), dans lequel le couteau (2) à contrôler est enfoncé,
- un premier dispositif de détection (6) conçu pour détecter la force d'enfoncement,
- un deuxième dispositif de détection (7) conçu pour détecter la profondeur de pénétration,
- un dispositif d'évaluation (8) conçu pour évaluer la force d'enfoncement détectée et la profondeur de pénétration détectée,
- un dispositif de préhension (4) conçu pour saisir et tenir/guider le couteau (2) pendant le contrôle,
- une unité d'approvisionnement (14) conçue pour approvisionner en corps de contrôle (3) de manière à permettre un contrôle sans interruption d'au moins deux couteaux (2).

2. Dispositif de contrôle selon la revendication 1,
**caractérisé en ce que** le corps de contrôle (3) est conçu sous forme de bandes de corps de contrôle et est conservé en pile ou en rouleau dans l'unité d'approvisionnement (14).

3. Dispositif de contrôle selon l'une des revendications précédentes,
**caractérisé en ce qu'**un tranchant (5) du couteau (2) à contrôler et la surface du corps de contrôle (3) sont inclinés par rapport à l'horizontale d'un angle α, en particulier d'un angle α d'environ 30°.

4. Dispositif de contrôle selon l'une des revendications précédentes,
**caractérisé en ce que**
- la matière plastique du corps de base (12) comporte un élastomère thermoplastique (TPE) et/ou
- une couche intermédiaire (13) est agencée entre le corps de base (12) et la couche (9), la couche intermédiaire (13) pouvant faire partie du corps de base (12).

5. Dispositif de contrôle selon la revendication 4,
**caractérisé en ce que**
- la couche intermédiaire (13) est réalisée en polyéthylène haute densité (HDPE) et/ou
- la couche intermédiaire (13) a une épaisseur d'environ 0,1 mm.

6. Dispositif de contrôle selon l'une des revendications précédentes,
**caractérisé en ce que** la couche (9) semblable à une peau ou à une feuille a une épaisseur d'environ 0,052 mm.

7. Dispositif de contrôle selon l'une des revendications 4 à 6,
**caractérisé en ce que** la couche (9) a une couche adhésive pouvant être assemblée par liaison de matière à la couche intermédiaire (13), en particulier une couche adhésive en acrylate.

8. Dispositif de contrôle selon l'une des revendications précédentes,
**caractérisé en ce que**
- le dispositif de contrôle (1) est relié à un dispositif d'affûtage (15),
- l'unité d'évaluation (8) est conçue de telle sorte qu'elle règle le dispositif d'affûtage (15) en fonction des valeurs déterminées par les dispositifs de détection (6, 7) et évaluées par l'unité d'évaluation (8) et optimise ainsi le résultat d'affûtage.

9. Dispositif d'affûtage (15) avec un dispositif de contrôle (1) selon l'une des revendications 1 à 7, dans lequel le dispositif de préhension (4) est conçu de telle sorte qu'il saisit et tient le couteau (2) aussi bien lors du contrôle dans le dispositif de contrôle (1) que lors de l'affûtage, décalé dans le temps, dans le dispositif d'affûtage (15).

10. Procédé prévu pour déterminer la capacité de coupe d'un couteau (2), dans lequel on enfonce le couteau (2) avec son tranchant (5) dans un corps de contrôle (3) et, pendant l'enfoncement, on mesure aussi bien la force d'enfoncement que la profondeur de pénétration et on les évalue au moyen d'une unité d'évaluation (8),
**caractérisé en ce que** le corps de contrôle (3) est constitué d'un corps de base (12) ayant une dureté comprise entre 30 et 90 Shore-A et d'une couche semblable à une peau ou à une feuille en polypropylène (PP).

11. Procédé selon la revendication 10, **caractérisé en ce que**
- on place le couteau (2) avec son tranchant (5) parallèlement à la surface du corps de contrôle (3),
- on pousse le couteau (2) avec son tranchant (5) sur la surface du corps de contrôle (3), le tranchant (5) et la surface du corps de contrôle (3) étant inclinés par rapport à l'horizontale d'un angle α, en particulier d'un angle α d'environ 30°.

12. Procédé selon la revendication 10 ou 11,
**caractérisé en ce que** le couteau (2) à contrôler est enfoncé au maximum de trois millimètres de profondeur dans le corps de contrôle (3).

13. Procédé selon l'une des revendications 10 à 12,
**caractérisé en ce que** le dispositif de contrôle (1) évalue les valeurs déterminées par les dispositifs de détection (6, 7) au moyen de l'unité d'évaluation (8), les transmet à un dispositif d'affûtage (15) relié pour la communication au dispositif de contrôle (1), règle ledit dispositif d'affûtage en fonction des valeurs déterminées par les dispositifs de détection (6, 7) et évaluées par l'unité d'évaluation (8) et optimise ainsi le résultat d'affûtage.
